# EUROPÄISCHE PATENTSCHRIFT

(11) **EP 4 086 062 B1**
(45) Veröffentlichungstag und Bekanntmachung des Hinweises auf die Patenterteilung: **19.03.2025**
(21) Anmeldenummer: 22171721.8
(22) Anmeldetag: 05.05.2022
(51) Int. Cl.: B29C 48/09, B29C 48/12, B29C 48/92, G01N 21/3581, B29C 48/265, B23D 45/02, B26D 1/56, B29C 48/11, G01B 11/06, G01B 11/12, G01N 21/89

(54) **TRENN- UND MESSEINRICHTUNG FÜR EINE EXTRUSIONSLINIE ZUR HERSTELLUNG VON PROFILSTÜCKEN UND VERFAHREN ZUM VERMESSEN UND TRENNEN EINES PROFILS**
SEPARATING AND MEASURING DEVICE FOR AN EXTRUSION LINE FOR PRODUCING PROFILED PIECES AND METHOD FOR MEASURING AND SEPARATING A PROFILE
DISPOSITIF DE SÉPARATION ET DE MESURE POUR UNE LIGNE D'EXTRUSION DESTINÉ À LA FABRICATION DE PIÈCES PROFILÉES ET PROCÉDÉ DE MESURE ET DE SÉPARATION D'UN PROFILÉ

(30) Priorität: 06.05.2021 DE 102021111868
(43) Veröffentlichungstag der Anmeldung: 09.11.2022
(73) Patentinhaber: CiTEX Holding GmbH, 49324 Melle (DE)
(72) Erfinder: Neumeister, Arno, 32457 Porta Westfalica (DE)
(74) Vertreter: Bremer, Ulrich

(56) Entgegenhaltungen:
- EP-A1- 3 480 553
- DE-A1- 102010 040 967
- DE-B3- 102014 005 651
- DE-B3- 102015 110 600
- US-A1- 2021 114 244

## Beschreibung

Die Erfindung betrifft eine Trenn- und Messeinrichtung für eine Extrusionslinie zur Herstellung von Profilstücken, eine derartige Extrusionslinie, sowie ein Verfahren zum Vermessen und Trennen eines Profils, weiterhin ein Verfahren zum Herstellen von Profilstücken.

In Extrusionslinien wird ein Ausgangsmaterial, insbesondere Kunststoff, Gummi oder eine Mischung unterschiedlicher Ausgangsmaterialien, fortlaufend aufgeschmolzen und zu einem Endlos-Profil extrudiert. Das extrudierte Endlos-Profil wird im Allgemeinen in einer Kühleinrichtung, insbesondere einem Kühltank, gekühlt, von einer Abzieheinrichtung gezogen und geführt, und nachfolgend in einer Trenneinrichtung in Profilstücke vorgegebener Länge getrennt. Die Profile können insbesondere Rohre sein.

Die Eigenschaften der so hergestellten Profilstücke werden durch die Parameter des Extruders, insbesondere die Zusammensetzung der Ausgangsmaterialien, die Extrusions-Temperatur, die Einstellung der internen Förderschnecke, sowie weiterhin die Abzugsgeschwindigkeit der Abzieheinrichtung sowie z. B. die Kühlung in der Kühleinrichtung bestimmt. Nach der Extrusion treten an dem Profil zum einen Schrumpfungs-Prozesse auf; weiterhin kann das warme Extrusionsmaterial ungleichmäßig zerlaufen und z. B. bei Rohren ein Sagging und eine Ovalität ausbilden, die in gewissem Umfang zulässig sind.

Hierbei ist es bekannt, die Profile nach der Extrusion durch THz-Messeinrichtungen auf Parameter wie z. B. Außendurchmesser, Innendurchmesser, Wandstärke und ggf. Brechungsindex des Materials hin zu vermessen. Für eine umfängliche Vermessung des Profils können eine Vielzahl von THz-Sensoren über den Umfang verteilt vorgesehen sein, oder es können ein oder mehrere THz-Sensoren in Umfangsrichtung um das Profil bzw. die Symmetrieachse umlaufen bzw. rotieren.

Da das Profil fortlaufend durch die THz-Sensoreinrichtung hindurch transportiert wird, wird bei umlaufenden bzw. rotierenden THz-Sensoren im Allgemeinen eine schraubenförmige Bahn um das Profil beschrieben.

Somit sind genaue THz-Vermessungen und Regelungen der Herstellungs-Parameter im Allgemeinen aufwändig und problematisch. Auch können nach der Vermessung erfolgende Änderungen wie ein Schrumpf, ein Sagging oder die Ausbildung einer Ovalität nicht erfasst werden.

Die DE 10 2007 053 476 A1 zeigt eine Trennvorrichtung zum Ablängen eines extrudierten Profils. Hierbei ist ein erster Antrieb an einer Aufnahmetrommel für das Profil und ein zweiter Antrieb an der Trennvorrichtung vorgesehen, um die relative Stellung der Trennvorrichtung zum Profil einzustellen.

Aus DE 10 2019 109 339 A1 ist eine THz-Messvorrichtung bekannt, bei der in Umfangsrichtung um einen Messraum angeordnete THz-Sensoren auf ein Messobjekt ausgerichtet und in zwei Sensorgruppen kalibriert werden. Hierbei kann jeder THz-Sensor für sich schwenkbar vorgesehen sein.

US 2021/0114244 A1 beschreibt eine Trenneinrichtung zum Ablängen von extrudierten Rohren. Die Trenneinrichtung weist einen Separator auf, der drehbar angebracht ist und um eine Extrusionsachse rotiert. An dem Separator sind Schneidwerkzeuge vorgesehen, die zusätzlich mit Energie versorgt werden. Hierbei ist eine elektromechanische Detektion der Werkzeuge vorgesehen, um eine Kupplungseinheit zwischen dem Werkzeug und einer Werkzeugaufnahme zu detektieren. Ein Rohr kann aufgenommen und die Einstellung in Abhängigkeit eines Rohrdurchmessers und einer Rohrdicke vorgenommen werden, wobei hierzu eine Detektion über die eingesetzten Klemmbacken der Schneidwerkzeuge erfolgt.

DE 10 2015 110 600 B3 beschreibt ein Verfahren zur Ermittlung mindestens einer Schichteigenschaft einer Schicht, insbesondere einer Schaumschicht in einem Extrusionsprozess, bei dem ein Extrusionsprodunkt mit einer Schaumschicht erzeugt und mittels elektromagnetischer Strahlung bestrahlt wird, wobei eine durch die Schaumschicht gelangte Strahlung detektiert und eine Zuführrate und eine Zuführmenge in Abhängigkeit dieser Messung eingestellt werden.

DE 10 2014 005 651 B3 zeigt eine Vorrichtung und ein Verfahren zum Steuern einer Abisoliereinrichtung für ein Kabel, wobei ein Kabel in einem Aufnahmebereich aufgenommen und mit elektromagnetischer Strahlung zwischen 0,1 und 30 THZ bestrahlt wird. Eine Sensoreinrichtung empfängt den Anteil der Strahlung, der die Isolation des Kabels durchlaufen hat, wodurch die Kabelisolierung detektiert werden kann, um die Abisoliereinrichtung anzusteuern.
DE 10 2010 040 967 A1 zeigt ein Verfahren zum Ablängen eines extrudierten Kunststoffrohres mittels einer Trennvorrichtung, bei dem ein Korb mit Schwinge und Halter für ein Schneidwerkzeug um eine Extrusionsachse eines extrudierten Rohres rotieren und an dem Schneidwerk ein Schneidmesser angebracht ist. Der Antrieb erfolgt über einen Akku, der an einer Ladestation angedockt ist. Bei Auslösung eines Schneidimpulses wird der Akku entkoppelt, der Korb rotiert um die Extrusionsachse und eine Schwinge schwingt in Richtung der Mittelachse des Rohres ein und führt hierbei das Messer für den Schneidvorgang.

Die EP 3480553 A1 beschreibt ein Terahertz- Messverfahren und eine Terahertz- Messvorrichtung zum Messen mindestens einer Wanddicke eines rohrförmigen Messobjektes, wobei zusätzlich zu einem THZ-Hauptsensor ein THZ-Zusatzsensor vorgesehen ist, der einen THZ-Zusatzstrahl entlang einer von der ersten optischen Achse des THZ-Hauptsensors verschiedenen zweiten optischen Achse aussendet, wobei die zweite optischen Achse gegenüber der ersten optischen Achse um ein Sensorwinkel verstellt ist und zumindest zeitweise nicht durch die Symmetrieachse verläuft, um hierdurch Wanddicken-Verformungen detektieren zu können.

Der Erfindung liegt die Aufgabe zugrunde, eine Trenn- und Messeinrichtung für eine Extrusionslinie, eine derartige Extrusionslinie sowie ein Verfahren zur Trennung und THz-Messung eines Profils zu schaffen, die mit relativ geringem Aufwand eine gute Vermessung von Profilen ermöglichen.

Diese Aufgabe wird durch eine Trenn- und Messeinrichtung nach dem Anspruch 1 sowie durch das Verfahren nach dem Anspruch 10 gelöst. Die Unteransprüche beschreiben bevorzugte Weiterbildungen. Hierbei ist weiterhin ein Verfahren zum Herstellen von Profilstücken unter Einsatz des erfindungsgemäßen Messverfahrens und/oder der erfindungsgemäßen Extrusionslinie vorgesehen.

Das erfindungsgemäße Verfahren zum Vermessen und Trennen kann insbesondere mit der erfindungsgemäßen Trenn- und Messeinrichtung durchgeführt werden; die erfindungsgemäße Trenn- und Messeinrichtung ist insbesondere zum Einsatz des erfindungsgemäßen Verfahrens vorgesehen. Weiterhin kann die erfindungsgemäße Extrusionslinie insbesondere zur Durchführung des erfindungsgemäßen Verfahrens zur Herstellung von Profilen eingesetzt werden.

Somit ist die Trenneinrichtung, die zur Abtrennung der Profilstücke aus dem Profil bzw. Endlos-Profil vorgesehen ist, mit einer THz-Sensoreinrichtung kombiniert. Die Trenn- und Messeinrichtung weist einen Schlitten auf, der zyklisch oder periodisch mit dem geförderten Profil mitfährt und während dieser Verstellung mittels einer Schneideinrichtung das Profil durchtrennt, wozu die Schneideinrichtung auf einem um die Symmetrieachse bzw. das Endlosprofil rotierenden Gestell vorgesehen ist. Erfindungsgemäß ist die THz- Sensoreinrichtung mit auf diesem rotierenden bzw. umlaufenden Gestell vorgesehen und vermisst hierbei das Profil.

Somit wird eine Trenn- und Messeinrichtung geschaffen, die zum einen das Abtrennen der Profilstücke, insbesondere Rohrstücke, aus dem Profil ermöglicht, und weiterhin eine zusätzliche vollumfängliche THz-Vermessung der erfassten Profile. Der Schlitten weist eine Klemmeinrichtung auf, um das geförderte Endlos-Profil durch Klemmung bzw. Reibschluss zu erfassen, so dass der Schlitten nachfolgend über eine Transportstrecke bzw. Verstellstrecke mit dem geförderten Profil auf z.B. einem Schienensystem verstellt wird. Hierdurch wird eine sichere Abtrennung des Profilstücks ermöglicht, da während des Schneidvorgangs die Position der Schneideinrichtung, die z. B. als Messer oder Säge ausgebildet sein kann, relativ zu dem Profil nicht verstellt wird und eine gleichmäßige Belastung des Profils erfolgt.

Somit wird auch z. B. eine Verformung des runden Profils, z. B. eines Rohres, durch einseitiges Eindrücken einer Schneideinrichtung vermieden, da die Schneideinrichtung um das Profil umläuft und gleichmäßig und allmählich einen umlaufenden, nach innen tiefer werdenden Schnitt durchführt. Indem auf der umlaufenden Struktur zusätzlich der mindestens eine THz-Sensor vorgesehen ist, kann dieser Sensor ebenfalls das Profilstück in einer Messebene und vollumfänglich vermessen.

Erfindungsgemäß werden einige Vorteile erreicht, insbesondere überraschend vorteilhafte Wirkungen:
Der apparative Aufwand ist gering, da die bereits vorgesehene, rotierende Struktur verwendet wird. Somit wird vorteilhafterweise synergistisch die zum Schneidvorgang vorgesehen rotierende Struktur auch für die Vermessung mittels der Sensorvermessung eingesetzt, anders als bei den eingangs beschriebenen Sensorvorrichtungen, die in separaten Gestellen um den Messraum vorgesehen sind. Weiterhin ermöglicht insbesondere auch der Einsatz der Sensoren auf dem Schlitten mit der Rotation eine vollumfängliiche Vermessung und somit synergistische Wirkung. Hierbei wird erfindungsgemäß insbesondere auch erkannt, dass das besondere Zusammenwirken bereits eine Überprüfung des Schneidvorgangs selbst durch die Sensorvorrichtung, und weiterhin auch mehrere funktionelle Möglichkeiten, insbesondere Arbeitsmodi, ermöglicht.

Es erfolgt eine vollumfängliche Vermessung in einer Messebene, wohingegen Vermessungen von umlaufenden THz-Sensoren, die ein fortlaufend durch die Sensoreinrichtung geführtes Endlos-Profil vermessen, nur Vermessungen entlang einer Schraubenbahn ermöglichen.

Die Vermessung kann am Ende der Produktionslinie erfolgen und somit die Profilstücke in ihrem Endzustand vermessen.

Die an dem Gestell vorgesehene THz-Sensoreinrichtung weist ein oder mehrere THz-Sensoren auf.

Die THz-Sensoren sind vorteilhafterweise jeweils mit ihren optischen Achsen radial nach innen, zur Symmetrieachse und somit senkrecht zu den Wänden des aufgenommenen Rohres ausgerichtet. Vorzugsweise sind sie in einer einzigen Messebene vorgesehen, die z.B. etwas zu der Schneidebene versetzt sein kann.

Gemäß einer vorteilhaften Weiterbildung ist zusätzlich zu der THz-Sensoreinrichtung der Trenn- und Messeinrichtung eine weitere Messvorrichtung in einem vorderen Bereich der Extrusionslinie vorgesehen. Die weitere Messvorrichtung kann insbesondere ebenfalls THz-Messungen durchführen, d.h. als vordere THz-Messvorrichtung ausgebildet sein, die das Profil z. B. direkt nach der Extrusion und/oder nach der Kühlung vermisst. Da somit insbesondere das Profil nach der Extrusion vermessen wird, misst es das extrudierte Profil in dessen weichem bzw. warmem Zustand.

Vorzugsweise kann ein Vergleich der Messung der vorderen THz-Messvorrichtung mit der nachfolgenden Messung der THz-Sensoreinrichtung der Trenn- und Messeinrichtung vorgesehen sein, der wertvolle Ermittlungswerte bzw. Informationen gibt.

Diese Ermittlungswerte sind insbesondere Eigenschaften oder Änderungen von Eigenschaften des Profils, wobei diese Eigenschaften oder Änderungen von Eigenschaften insbesondere umfassen:
einen Schrumpf bzw. relativen Schrumpf des Endlos-Profils während seiner Abkühlung,
Deformationen des Profils, insbesondere eine Deformation durch Sagging als ungleichmäßige Verformung durch gravitativ bedingtes Fließen des weichen Extrusionsmaterials, und/oder die Ausbildung einer Ovalität als Unrundheit des Außenumfangs,
   eine Veränderung der Wanddicke, insbesondere bei Unter- oder Überschreiten vorgegebener Bereiche.

Alternativ oder ergänzend zu den Eigenschaften des Profils können als Ermittlungswerte auch Kalibrierungswerte für eine Kalibrierung der vorderen THz-Messvorrichtung ermittelt werden. Somit kann z.B. der temperaturbedingte Schrumpf ermittelt werden und zur Kalibrierung der vorderen THz-Messvorrichtung herangezogen werden, so dass vorzugsweise in den Messwerten der vorderen THz-Messvorrichtung der Schrumpf bereits berücksichtigt oder herausgerechnet werden kann.

Alternativ oder ergänzend können die vordere THz-Messeinrichtung und die THz-Sensoreinrichtung sich auch gegenseitig überwachen auf z.B. Fehler und/oder einen Ausfall oder Defekt.

Alternativ oder ergänzend können durch die Auswertung der Messsignale der THz-Sensoreinrichtung, insbesondere durch den Vergleich mit der vorderen THz-Messeinrichtung, insbesondere auch Herstellungs-Parameter angepasst werden, z. B. ein oder mehrere der folgenden Parameter:
die Ansteuerung des Extruders, insbesondere der Massedurchsatz, die Extrusionsgeschwindigkeit und/oder Extrusions-Temperatur, weiterhin die Abzugs- Geschwindigkeit des Abzugs, der für die Ausbildung der Wanddicke oder des Durchmessers des Profils mit verantwortlich ist, weiterhin eine Ansteuerung der Kühleinrichtung.

Gemäß einer vorteilhaften Weiterbildung sind die THz-Sensoren mit Energiespeichern, insbesondere Akkumulatoren bzw. galvanischen Energiespeichern ausgestattet. Somit ist eine Draht-Verbindung von dem rotierenden Gestell zu einer außenstehenden Einrichtung nicht erforderlich, so dass Probleme z. B. des Aufwickelns eines Zuführdrahtes vermieden werden. Vorteilhafterweise können die Energiespeicher der THz-Sensoren jeweils z. B. induktiv aufgeladen werden, d. h. während der Rotationsbewegung, oder auch in den Rückverstell-Phasen des Schlittens, bei denen das Gestell nicht rotiert.

Gemäß einer Weiterbildung kann eine Positionsbestimmung vorgesehen sein, bei der der Winkel des jeweiligen THz-Sensors ermittelt wird. Eine derartige Bestimmung kann z. B. mittels eines Inkrementalgebers des Rotationsantriebes, und/oder anhand von Beschleunigungssensoren ermittelt werden. Somit können die Messwerte, insbesondere auch Unregelmäßigkeiten, bezüglich der Umfangs-Position des Profils ermittelt werden.

Da während des Schneidprozesses Material-Partikel, z. B. Späne, abgetrennt werden, ist vorteilhafterweise als Schutz der THz-Sensoren eine pneumatische Blaseinrichtung zum Ablassen der erzeugten Spane vorgesehen.

Gemäß einer Weiterbildung ist die Einstellung des Klemmdrucks der Klemmeinrichtung, z.B. von Klemmbacken, aufgrund der Messwerte, insbesondere eines gemessenen Ovalitätswertes des Profils bzw. Rohres möglich, um eine gleichmäßige Erfassung in der Klemmeinrichtung zu ermöglichen. Somit wird der Klemmvorgang gegenüber herkömmlichen Trenneinrichtungen verbessert.

Gemäß einer vorteilhaften Ausbildung sind mehrere Arbeitsmodi möglich oder vorgesehen:
In einem ersten Arbeitsmodus, dem Standby-Modus oder statischen Arbeitsmodus wird das geförderte Profil nicht geschnitten. Die Klemmeinrichtung und Schneideinrichtung sind im Standy bzw. außer Betrieb, sodass auch der Schlitten nicht verstellt wird. Somit messen die ein oder mehreren THz- Sensoren der Sensoreinrichtung das geförderte Profil während dessen Förderung, d. h. in Längsstreifen entlang der Transportrichtung, d. h. im Wesentlichen parallel zu der Symmetrieachse. Somit bildet die THz-Sensoreinrichtung ein statisches Messsystem aus.

Als zweiter Arbeitsmodus oder Schneidmodus ist der Schneidprozess vorgesehen, bei dem somit - wie oben beschrieben - die Klemmeinrichtung das geförderte Profil erfasst und nachfolgend der Schlitten mitsamt dem geförderten Profil mit verstellt wird. Hierbei erfolgt die oben beschriebene THz-Vermessung durch die ein oder mehreren THz-Sensoren in Umfangsrichtung in der - bezüglich des Profils - festen Messebene. Somit wird eine ringförmige Messlinie an dem Profil bzw. Rohr ausgebildet.

Vorteilhafterweise ist als dritter Arbeitsmodus ein Umlaufmodus vorgesehen, bei dem bei aktiver Klemmeinrichtung und somit verfahrendem Schlitten das Gestell umläuft, aber die Schneideinrichtung außer Betrieb ist, d.h. es findet kein Schneidprozess statt. Die THz-Sensoren führen vollumfängliche Messungen durch, wobei insbesondere auch Messungen an Messebenen ermöglicht werden, in denen kein Schneidvorgang erfolgt.

**In** einem vierten Arbeitsmodus, dem Spiralmodus, ist die Klemmeinrichtung außer Betrieb, das Gestell rotiert und die Schneideinrichtung ist außer Betrieb. Somit wird das Profil in einer Spiralbahn bzw. Schraubenbahn vermessen.

Insbesondere bei geringeren Transportgeschwindigkeiten, einer höheren Anzahl von THz-Sensoren und gegebenenfalls einer hohen Umlaufgeschwindigkeit der THz-Sensoreinrichtung kann auch in dem Spiralmodus eine vollständige oder eine weitgehende Abdeckung des Profils erreicht werden.

Jeder dieser Arbeitsmodi ist unabhängig von den anderen Arbeitsmodi möglich; somit kann grundsätzlich z.B. auch nur der Schneidmodus, oder auch nur der Standby-Modus und Schneidmodus durchgeführt werden.

Somit sind mit geringem Aufwand unterschiedliche Arbeitsmodi möglich. Insbesondere bei Ausbildung längerer Rohrstücke wird der Schlitten nicht fortlaufend verstellt, so dass die Phasen mit stillstehendem Schlitten in dem Standby-Modus und/oder Spiralmodus genutzt werden können.

Insbesondere in dem Schneidmodus und/oder dem Umlaufmodus, d.h. bei Klemmen und Rotieren, kann bei einer THz-Sensoreinrichtung mit mehreren in Umfangsrichtung beabstandet vorgesehenen THz-Sensoren eine Überwachung der einzelnen THz-Sensoren erfolgen, indem eine Positionsbestimmung der Messwerte an dem Profil erfolgt und die Messwerte der mehreren Sensoren an den gleichen Stellen des Profils miteinander verglichen werden, so dass bei Abweichungen der Messwerte auf Fehler in den Sensoren geschlossen werden kann. Hierbei kann z.B. auch eine Kalibrierung z.B. eines systematisch abweichenden einzelnen THz-Sensors der THz-Sensoreinrichtung erfolgen.

Durch die THz-Trenn- und Messeinrichtung und/oder das THz-Messverfahren können auch besondere Profile vermessen werden, z.B. Wellrohre, die Valleys (Täler) und Berge aufweisen, z.B. auch weitere Strukturen mit größerem Außendurchmesser, wie
- Fittings (Innenmuffe, Spigot), die insbesondere zur Aufnahme von Ringdichtungen dienen und
   Außenmuffen (Bell), die insbesondere zum Verlegen oder zur Befestigung des Wellrohrs dienen.

Diese Strukturen sind insbesondere jeweils ringförmig umlaufend ausgebildet. Eine herkömmliche Messung dieser Strukturen ist problematisch, da bei durchlaufendem Wellrohr eine genaue Vermessung einer umlaufenden, in Transportrichtung relativ schmalen Struktur schwer möglich ist.

Insbesondere in dem Umlaufmodus, d.h. bei Klemmung und umlaufender THz-Sensoreinrichtung, kann eine sehr genaue Vermessung dieser Strukturen erfolgen, da jeweils eine Messebene sehr genau eingehalten werden kann.

Die THz-Strahlung der THz-Sensoreinrichtung, vorzugsweise auch die THz-Strahlung der vorderen Messvorrichtung, kann insbesondere im Bereich von 10 GHZ bis 50 THz, insbesondere 10 GHZ bis 10 THZ, insbesondere 20 GHz bis 3 THZ vorzugsweise 50GHz bis 1 THz liegen.

Somit kann die THz-Strahlung sich auch in den Bereich der Radarstrahlung und/oder Mikrowellenstrahlung erstrecken.

Die THz-Strahlung kann insbesondere als direkte Laufzeitmessung und/oder mittels Frequenzmodulation und/oder als gepulste Strahlung ausgesandt und detektiert werden.

Die Erfindung wird im Folgenden anhand der beiliegenden Zeichnungen an einer Ausführungsform näher erläutert. Es zeigen:
- Fig. 1: eine Extrusionslinie zur Herstellung von Kunststoff-Rohren gemäß einer Ausführungsform der Erfindung;
- Fig. 2: die Trenn- und Messeinrichtung der Extrusionslinie; und
- Fig. 3: ein Flussdiagramm eines erfindungsgemäßen Verfahrens.

Eine Extrusionslinie 1 weist einen Extruder 2 mit Kalibrierhülse 2a zum Herstellen eines Rohres 4 aus einem Kunststoffmaterial, weiterhin eine vordere Messvorrichtung 3, eine Kühleinrichtung 5, einen Abzug 6 sowie eine Trenneinrichtung 8 auf. Somit wird Ausgangsmaterial 9, z.B. ein Granulat, Pellets, Pulver oder Flocken aus Kunststoffmaterial und ggf. Additiven, dem Extruder 2 zugeführt, der das Ausgangsmaterial 9 aufschmilzt und insbesondere mittels der Kalibrierhülse 3 und ggf. weiterer Mittel das Rohr 4 aus dem Kunststoff- oder Gummimaterial herstellt. Das Rohr 4 wird von dem vor oder hinter der Kühleinrichtung vorgesehenen Abzug 6 durch die Kühleinrichtung 5 gezogen und gelangt nachfolgend zu der Trenneinrichtung 8.

Das vordere Messsystem 3 dient zur Vermessung des Rohres 4 nach dessen Extrusion und ist vorteilhafterweise als vorderes THz-Messsystem 3 ausgebildet. Es ist stationär, d.h. nicht in Transportrichtung T verstellbar, vorgesehen, wobei es z.B. mehrere feste vordere THz-Sensoren 7 aufweisen kann oder auch mit ein oder mehreren vorderen THz-Sensoren 7 in Umfangsrichtung U um die Symmetrieachse A rotieren kann. Die ein oder mehrere vorderen THz-Sensoren 7 messen insbesondere ein oder mehrere der folgenden Eigenschaften:
Wanddicke des Wandbereichs 18,
Innenradius, Außenradius des Rohres 4,
Brechungsindex als Materialeigenschaft des Rohres 4,
Abweichungen der Formgebung des Wandbereiches 18 von der idealen Kreisform bzw. Ringform, insbesondere auf Sagging und/oder Ovalität, weiterhin Fehler wie z.B. Lunker (Luft- und/oder Materialeinschlüsse).

Die Trenneinrichtung 8 dient dazu, Rohrstücke 10 definierter Länge L aus dem fortlaufend in der Transportrichtung T transportierten Rohr 4 abzutrennen; hierzu weist die Trenneinrichtung 8 einen auf Schienen 11 vorgesehenen Schlitten 12 auf, der zyklisch auf der Schiene 11 mit dem in Transportrichtung T transportierten Rohr 4 fährt. An dem Schlitten 12 ist eine Klemmeinrichtung 14 mit Klemmbacken 14a zum Ergreifen bzw. reibschlüssigen Erfassen des Rohres 4 vorgesehen, so dass der Schlitten 12 nach Ergreifen des Rohres 4 während einer Transport-Zeit tp mit gleicher Transportgeschwindigkeit v wie das Rohr 4 fährt und nachfolgend die Klemmeinrichtung 14 sich öffnet und der Schlitten 11 zurück an seine Anfangsposition gelangt. An oder in dem Schlitten 12 ist weiterhin ein Gestell 15 vorgesehen, das durch einen Rotationsantrieb 30 angetrieben wird und in Umfangsrichtung U um das Rohr 4 bzw. die Symmetrieachse A umläuft, aber ohne Kontakt mit dem Rohr 4 vorgesehen ist. An dem Gestell 15 ist eine Schneideinrichtung 16 vorgesehen, die als Säge oder Messer ausgebildet sein kann. Die Schneideinrichtung 16 wird an dem umlaufenden Gestell 15 radial nach innen zu der Symmetrieachse A hingeführt und trennt hierbei den Wandbereich 18 des Rohres 4 gleichmäßig durch, wodurch die Rohrstücke 10 definierter Länge L abgetrennt werden, die nachfolgend abtransportiert werden.

An dem umlaufenden Gestell 15 ist weiterhin eine THz- Sensoreinrichtung 20 mit ein oder mehreren, z.B. vier oder acht, THz-Sensoren 22 vorgesehen. Gemäß der hier gezeigten Ausführungsform sind vier THz-Sensoren 22 an dem Gestell 15 in einer Messebene 24 angebracht und weisen mit ihren jeweiligen optischen Achsen B radial nach innen, d.h. zur Symmetrieachse A hin, die die Symmetrieachse des Schlittens 12, des Gestells 15 und des Rohres 4 darstellt. Die THz-Sensoren 22 laufen somit während des Schneidprozesses mit dem Gestell 15 um das Rohr 4 herum und vermessen hierbei das Rohr 4 auf eine oder mehrere der folgenden Eigenschaften:
Wanddicke des Wandbereichs 18,
Innenradius, Außenradius des Rohres 4,
Brechungsindex als Materialeigenschaft des Rohres 4,
Abweichungen der Formgebung des Wandbereiches 18 von der idealen Kreisform bzw. Ringform, insbesondere auf Sagging und/oder Ovalität, weiterhin auf Fehler wie z.B. Lunker (Lufteinschlüsse).

Zum Schutz der THz-Sensoren 22 ist vorzugsweise eine pneumatische Blaseinrichtung 32 vorgesehen, um Späne pneumatisch von den THz-Sensoren 22 abzublasen.

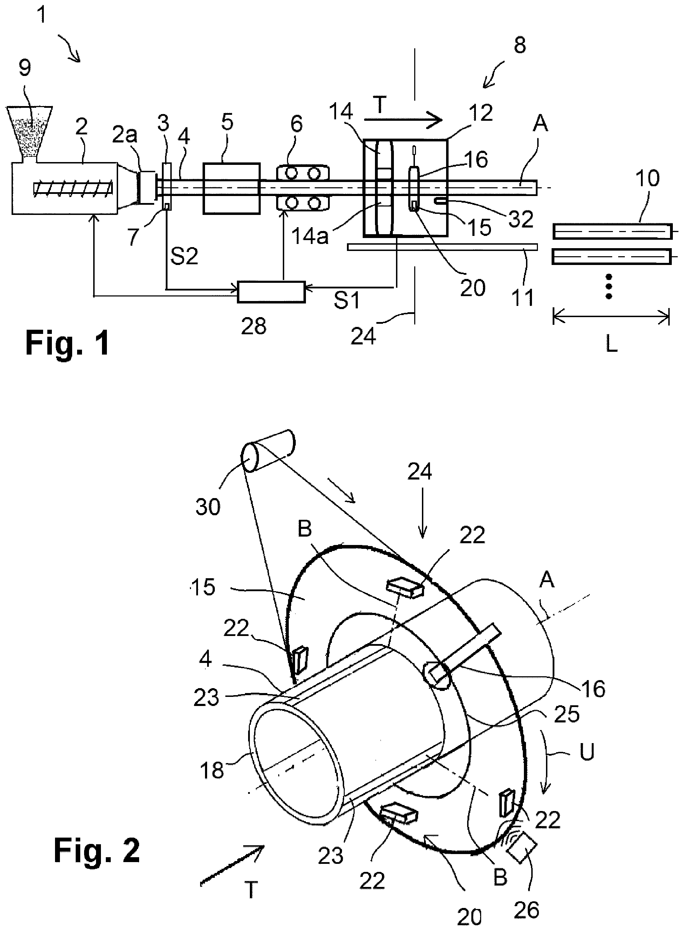

Für die THz- Sensoreinrichtung 20 können ein oder vorzugsweise mehrere Arbeitsmodi vorgesehen sein:
In einem ersten Arbeitsmodus, dem Standby-Modus, wird das Rohr 4 nicht geschnitten, das heißt die Klemmeinrichtung 14 und die Trenneinrichtung 16 sind in einem Standby-Betrieb bzw. außer Betrieb. Der Schlitten 12 wird somit nicht verfahren, so dass das Rohr 4 durch das stationäre Gestell 15 hindurch läuft. Hierbei vermessen die THz-Sensoren 22 das Rohr 4 somit stationär, d.h. ohne Längsverstellung und ohne Umlaufbewegung bzw. Rotation, entlang der in Fig. 2 gezeigten Längsstreifen 23, die sich parallel zur Symmetrieachse A erstrecken. Somit kann ein kontinuierlicher Wanddickenverlauf in Transportrichtung T bzw. Längsrichtung des Rohres 4 gemessen werden.

Der zweite Arbeitsmodus, der Schneidmodus, erfolgt während des Schneidprozesses, indem bei aktiver Klemmeinrichtung, rotierendem Gestell 15 und aktiver Schneideinrichtung die THz-Sensoren 22 zusammen mit dem Gestell 15 um das Rohr 4 umlaufen und die Wanddickenverteilung vollumfänglich vermessen. Da die Messebene 24 mit dem Rohr 4, d.h. mit gleicher Transportgeschwindigkeit v verstellt wird, erfolgt eine sehr genaue Messung in der Messebene 24 entlang der eingezeichneten ringförmigen Messlinie 25. Die Blaseinrichtung 32 ist vorzugsweise eingeschaltet.

Weiterhin kann ein dritter Arbeitsmodus, der Umlaufmodus, vorgesehen sein, bei dem bei aktiver Klemmeinrichtung 14 und somit verfahrendem Schlitten 12 das Gestell 15 rotiert, aber die Schneideinrichtung 16 außer Betrieb ist, d.h. es findet kein Schneidprozess statt, wobei die THz-Sensoren 22 Messungen durchführen. Somit werden vollumfängliche Messungen auch an Messebenen 24 ermöglicht, in denen kein Schneidvorgang erfolgt. Insbesondere bei längeren Rohren 4 kann somit der Schlitten 12 auch zwischen den Schneidvorgängen genutzt werden.

In einem vierten Arbeitsmodus, dem Spiralmodus, ist die Klemmeinrichtung 14 außer Betrieb, das Gestell 15 rotiert und die Schneideinrichtung 15 ist außer Betrieb. Somit wird das Rohr 4 in einer Spiralbahn bzw. Schraubenbahn vermessen.
Durch einen Vergleich der hinteren Messung durch die die THz- Sensoreinrichtung 20 mit der vorderen Messung durch die vordere Messvorrichtung 3, die an dem Rohr 4 nach der Extrusion an dem noch warmen Material durchgeführt worden ist, kann insbesondere der Schrumpf des Rohres 4 kalibriert werden. Die hintere Messung erfolgt an dem bereits abgekühlten Material und stellt somit die Eigenschaften der Rohrstücke 10 genauer dar.

Beide Messungen können zur Detektion von Unregelmäßigkeiten, insbesondere von Sagging, d.h. Verformungen des noch weichen Materials, herangezogen werden. Somit können Abweichungen der hinteren Messung gegebenenfalls auf Sagging, insbesondere auf durch die Gravitation auftretende Fließbewegungen des warmen Materials zurückgeführt werden, die bis zu einem gewissen Maß zulässig sind, insbesondere wenn die vorgegebenen Mindest-Wanddicken nicht unterschritten werden. Falls das Sagging zu stark wird, was insbesondere durch den Vergleich der Messungen ermittelt werden kann, können z.B. die Einstellungen des Extruders 2, z.B. die Werkzeugzentrierung, Extrusions-Temperatur, und Liniengeschwindigkeit eingestellt werden.

Die THz-Sensoren 22 sind vorzugsweise ohne direkte Leistungsversorgung angebracht, d.h. es ist keine Drahtverbindung von den THz-Sensoren 22 zu dem äußeren, nicht umlaufenden bzw. nicht rotierenden Schlitten 12 vorgesehen. Hierbei können die THz-Sensoren 22 Akku-betrieben sein; vorzugsweise können die THz-Sensoren 22 induktiv über eine an dem Schlitten vorgesehene Induktions-Aufladeeinrichtung 26 aufgeladen werden

Gemäß einer bevorzugten Ausbildung erfolgt eine Positionsbestimmung, in welcher Winkelstellung sich die THz-Sensoren 22 befinden, mittels z.B. eines Inkrementalgebers des Rotationsantriebes 30 oder anhand von Beschleunigungssensoren.

Gemäß eine bevorzugten Ausbildung kann eine Einstellung des Klemmdrucks der Klemmeinrichtung 14 aufgrund der gemessenen Ovalität bzw. Ovalitätswerte des Rohres 4, z.B. aufgrund des Wanddickenverlaufs in Umfangsrichtung U, erfolgen.

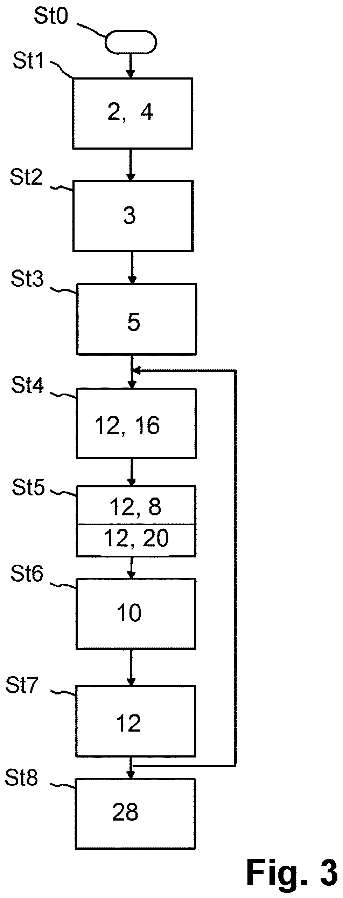

Das erfindungsgemäße Messverfahren weist somit gemäß der Ausführungsform der Figur 3, in der insbesondere der Schneidmodus beschrieben wird, die folgenden Schritte auf:
Nach dem Start in Schritt St0 erfolgt in Schritt St1 die Extrusion und der Transport, d.h. der Extruder 2 gibt das Rohr 4 aus, das durch den Abzug 6 in der Transportrichtung T transportiert wird. Die Extrusion und der Transport erfolgen fortlaufend während des Verfahrens.

In Schritt St2 erfolgt vorteilhafterweise die erste Messung durch die vordere Messvorrichtung 3, die somit vordere Messsignale S2 ausgibt. Nachfolgend gelangt das Rohr 4 - im Allgemeinen nach dem optionalen Schritt St3 der Kühlung des Rohres 4 in der Kühleinrichtung 5 - zu der Trenneinrichtung 8. Hier wird das Rohr 4 zunächst in dem Klemm-Schritt St4 von der Klemmeinrichtung 14 ergriffen und somit der Schlitten 12 an dem Rohr 4 fixiert, so dass er nachfolgend mit dem Rohr 4 in Transportrichtung T verfahren wird.

Während der Verstellung erfolgt in Schritt St5 eine Drehung bzw. Rotation des Gestells 15, wobei gleichzeitig in dem Schritt St5a der Schneidvorgang durch die Schneideinrichtung 16, und in Schritt St5b die THz-Vermessung durch die THz-Sensoreinrichtung 20 mit den an dem Gestell 15 umlaufenden THz-Sensoren 22 erfolgt, die somit Sensor-Messsignale S1 ausgeben.

In Schritt St5 läuft somit das Gestell 15 um das Rohr 4 herum, um sowohl den Schneidvorgang als auch die THz-Vermessung in der Umfangsrichtung U zu ermöglichen.

In Schritt St6 ist das Rohr 4 durchgetrennt, so dass ein Rohrstück 10 abgetrennt ist und nachfolgend abtransportiert wird. In Schritt ST7 erfolgt die Rückverstellung des Schlittens 12, entgegen der Transportrichtung T, in die Ausgangsposition, so dass das Verfahren vor den Schritt ST4 zurückverstellt wird.

Weiterhin können in dem Schritt St8 die Messergebnisse, d.h. die Signale S1 und S2 der THz-Sensoreinrichtung 20 und der vorderen Messvorrichtung 3 ausgewertet werden, um ein oder mehrere der oben genannten Eigenschaften zu ermitteln.

Wie oben ausgeführt können in dem Verfahren zusätzlich zu dem Schneidmodus auch ein oder mehrere der weiteren Arbeitsmodi durchgeführt werden.

Somit wird vorteilhafterweise ein Extrusionsverfahren bzw. Verfahren zum Herstellen von Rohrstücken 10 ermöglicht, bei dem die Parameter des Schrittes St1, d. h der Betrieb des Extruders 2, geregelt werden können.

In dem Schritt St4 der Klemmung kann die Klemmkraft eingestellt werden, indem aufgrund des Durchmessers und der ermittelten Ovalität die Ansteuerung der Klemmeinrichtung 14 angepasst wird.

### Bezugszeichenliste

- 1: Extrusionsstrecke
- 2: Extruder
- 2a: Kalibrierhülse
- 3: vordere Messvorrichtung
- 4: Endlos-Rohr
- 5: Kühleinrichtung
- 6: Transporteinrichtung, z.B. Abzug
- 7: vordere THz-Sensoren der vorderen Messvorrichtung
- 8: Trenneinrichtung
- 9: Ausgangsmaterial, z.B. Granulat, Pellets, Pulver oder Flocken aus Kunststoffmaterial und ggf. Additiven,
- 10: Rohrstücke
- 11: Schienen
- 12: Schlitten
- 14: Klemmeinrichtung
- 14a: Klemmbacken der Klemmeinrichtung 14
- 15: Gestell
- 16: Schneideinrichtung an Gestell 15
- 18: Wandbereich
- 20: Sensoreinrichtung
- 22: THz-Sensoren
- 23: Längsstreifen
- 24: Messebene
- 25: ringförmige Messlinie
- 26: Induktions-Aufladeeinrichtung
- 28: Steuer- und Auswerteeinrichtung
- 30: Rotationsantrieb
- 32: pneumatische Blaseinrichtung

- A: Symmetrieachse des Schlittens 12 und des Gestells 15
- B: optische Achsen der THz-Sensoren 22
- S1: Sensor-Messsignale der Sensoreinrichtung 20
- S2: Messsignale der vorderen Messvorrichtung 3
- L: Länge der Rohrstücke 10
- T: Transportrichtung
- tp: Transport-Zeit
- U: Umfangsrichtung
- v: Transportgeschwindigkeit

## Patentansprüche

1. Trenn- und Messeinrichtung (8) für eine Extrusionslinie (1) zur Herstellung von Profilstücken (10),
wobei die Trenn- und Messeinrichtung (8) aufweist:
einen Schlitten (12), der auf einer Führungseinrichtung (11) entlang einer Transportrichtung (T) verstellbar ist,
eine an dem Schlitten (12) aufgenommene Klemmeinrichtung (14) zum Klemmen eines entlang der Transportrichtung (T) geführten Profils (4), wobei der Schlitten (12) mit verklemmter Klemmeinrichtung (14) entlang der Transportrichtung (T) verstellbar ist,
ein an dem Schlitten (12) aufgenommenes und in Umfangsrichtung (U) um eine Symmetrieachse (A) rotierbares Gestell (15),
eine Schneideinrichtung (16), die an dem Gestell (15) aufgenommen und mit dem Gestell (15) in der Umfangsrichtung (U) um die Symmetrieachse (A) rotierbar ist, wobei die Schneideinrichtung (16) in radialer Richtung zu der Symmetrieachse (A) verstellbar ist, zum Abtrennen von Profilstücken (10) aus einem aufgenommenen Profil (4),
**dadurch gekennzeichnet, dass**
eine rotierbare THZ-Sensoreinrichtung (20) an dem Gestell (15) aufgenommen und mit dem Gestell (15) in der Umfangsrichtung (U) rotierbar vorgesehen ist,
wobei die THZ-Sensoreinrichtung (20) ein oder mehrere THz-Sensoren (22) aufweist, deren optische Achsen (B) jeweils radial zu der Symmetrieachse (A) hin ausgerichtet sind, zur vollumfänglichen Vermessung des mit dem Schlitten (12) verfahrenen Profils (4).

2. Trenn- und Messeinrichtung (8) nach Anspruch 1, **dadurch gekennzeichnet, dass** die Führungseinrichtung (11) durch Schienen (11) gebildet ist, auf denen der Schlitten (12) entlang der Transportrichtung (T) verstellbar ist,
wobei ein Rückführ-Mechanismus, z. B. durch Federvorspannung oder als aktiver Antrieb, zum zyklischen Zurückstellen des Schlittens (12) nach Erreichen dessen Endposition vorgesehen ist.

3. Trenn- und Messeinrichtung (8) nach einem der vorherigen Ansprüche, **dadurch gekennzeichnet, dass** an dem Schlitten (12) ein Rotationsantrieb (30) vorgesehen ist zum kontinuierlichen Drehen des Gestells (15) in der Umfangsrichtung (U).

4. Trenn- und Messeinrichtung (8) nach einem der vorherigen Ansprüche, **dadurch gekennzeichnet, dass** die Schneideinrichtung (16) als Messer oder Säge ausgebildet ist zum Eindringen in einen Wandbereich (18) des aufgenommenen Profils (4) während des Umlaufs um das Profil (4).

5. Trenn- und Messeinrichtung (8) nach einem der vorherigen Ansprüche, **dadurch gekennzeichnet, dass** die ein oder mehreren THz-Sensoren (22) interne Energiespeicher, insbesondere Akku-Speicher aufweisen, die von außerhalb des Gestells (15) aufladbar sind, insbesondere induktiv über eine Induktions-Aufladeeinrichtung (26).

6. Trenn- und Messeinrichtung (8) nach einem der vorherigen Ansprüche, **dadurch gekennzeichnet, dass** eine pneumatische Blaseinrichtung (32) vorgesehen ist zum Wegblasen von Spänen aus der Messebene (24) und/oder von den THz-Sensoren (24).

7. Extrusionslinie (1), die aufweist:
einen Extruder (2) zur Aufnahme eines Ausgangsmaterials (9) und Ausgeben eines extrudierten Profils (4) entlang einer Symmetrieachse (A) in einer Transportrichtung (T),
einen Abzug (6) zum Abziehen und Transportieren des Profils (4) in der Transportrichtung (T), und
eine Trenn- und Messeinrichtung (8) nach einem der vorherigen Ansprüche, die vorgesehen ist, das entlang der Symmetrieachse (A) ausgegebene Profil (4) aufzunehmen, abzutrennen und zu vermessen, zur Ausgabe von Profilstücken (10) definierter Länge (L), und
eine Steuer- und Auswerteeinrichtung (28), die Messsignale der THz-Sensoreinrichtung (20) aufnimmt und auswertet.

8. Extrusionslinie (1) nach Anspruch 7, **dadurch gekennzeichnet, dass** die Steuer- und Auswerteeinrichtung (28) derartig ausgebildet und eingerichtet ist, dass sie eines oder mehrere der folgenden Schritte durchführt:
- Ansteuern der THz-Sensoreinrichtung (20) zur Durchführung der THz-Messung und Aufnehmen der Sensorsignalen (S1) der THz-Sensoreinrichtung (20),
- Ansteuern der Klemmeinrichtung (14) zum Ergreifen des Profils (4),
- Ansteuern der Trenneinrichtung (16),
- Ansteuern des Abzugs (6) zur Einstellung der Transportgeschwindigkeit (v),
- Ermitteln eines oder mehrere der folgenden Eigenschaften des Profils (4): eine Wanddicke, einen Außendurchmesser, einen Innendurchmesser, einen Brechungsindex des Profilmaterials, Abweichungen von der Profilform, insbesondere Wanddicke, Durchmesser, eine Ovalität und/oder ein Sagging.

9. Extrusionslinie (1) nach Anspruch 7 oder 8, **dadurch gekennzeichnet, dass** vor der Trenn- und Messeinrichtung (8), insbesondere vor dem Abzug (6) und einer Kühleinrichtung (5), eine vordere Messvorrichtung (3) vorgesehen ist, zum Vermessen des von dem Extruder (2) ausgegebenen Profils (4),
wobei die vordere Messvorrichtung (3) als vordere THz-Messvorrichtung (3) ausgebildet ist mit ein oder mehreren vorderen THz-Sensoren (7) zum Vermessen des Profils (4),
wobei die Steuer- und Auswerteeinrichtung (28)
- die Messsignale (S1, S2) der THz-Sensoreinrichtung (20) und der vorderen Messvorrichtung (3) aufnimmt, auswertet und miteinander vergleicht,
- und aus dem Vergleich Ermittlungswerte ermittelt,
insbesondere Eigenschaften des Profils (4) und/oder Änderungen des Profils (4) und/oder Kalibrierungswerte für eine Kalibrierung der vorderen THz- Messvorrichtung (3), z.B. einen Schrumpf des Profils (3) und/oder Deformationen, z.B. Sagging und/oder eine Ovalität des Profils (4).

10. Verfahren zum Vermessen und Trennen eines Profils (4) unter Verwendung einer Trenn-und Messeinrichtung (8) gemäß einem der Ansprüche 1-6, mit folgenden Schritten:
Verfahren eines Profils (4) in der Transportrichtung (T) mit einer Transportgeschwindigkeit (v) (St1), Bereitstellen der Trenn- und Messeinrichtung (8), Erfassen des Profils (4) durch die Klemmeinrichtung (14) der Trenn- und
Messeinrichtung (8), (St4) Verstellung des Schlittens (12) entlang der Transportrichtung (T) mit der Verstellgeschwindigkeit (v) des Profils (4) (St4, St5),
Drehen des Gestells (15) des Schlittens (12) in einer Umfangsrichtung (U) um das Profil (4) herum, (St5) wobei an dem Gestell (15) die Schneideinrichtung (16) und die THz-Sensoreinrichtung (20) mit einem oder mehreren THz-Sensoren (22) vorgesehen ist,
Trennen des Profils (4) durch die Trenneinrichtung (16) (St5a) und Vermessen des Profils (4) durch die THz-Sensoreinrichtung (20) (St5b) während der Drehung in Umfangsrichtung (U),
Durchtrennen des Profils (4) und Ausbilden eines abgetrennten Profilstückes (10) definierter Länge (L), (St6)
Rückverstellung des Schlittens (12) entgegen der Transportrichtung (T) in die Ausgangsposition (St7), und
Rückführung zu dem Schritt des Erfassens des Profils (4) (St4),
wobei eine oder mehrere der folgenden Eigenschaften des Profils (4) ermittelt werden:
eine Wanddicke, ein Außendurchmesser, ein Innendurchmesser, ein Brechungsindex des Profilmaterials, Abweichungen von der Profilform, insbesondere Wanddicke, Durchmesser eine Ovalität und/oder ein Sagging.

11. Verfahren nach Anspruch 10, **dadurch gekennzeichnet, dass**
weiterhin das Profil (4) vor dem Erfassen durch die Klemmeinrichtung in einer vorderen THz-Messung vermessen wird, (St2)
und die Messsignale (S1, S2) der THz-Sensoreinrichtung (20) und der vorderen THz-Messvorrichtung (3) miteinander verglichen werden (St8), und aus dem Vergleich Ermittlungswerte gebildet oder ermittelt werden.

12. Verfahren nach Anspruch 11, **dadurch gekennzeichnet, dass** als Ermittlungswerte eines oder mehrere der folgenden Punkte ermittelt werden:
- Eigenschaften des Profils (4) und/oder Änderungen von Eigenschaften des Profils (4), insbesondere ein Schrumpf des Profils (3) und/oder Deformationen, z.B. ein Sagging und/oder eine Ovalität des Profils (4),
- Kalibrierungswerte für eine Kalibrierung der Messwerte der vorderen THz- Messvorrichtung (3), z.B. aus einem Schrumpf des Profils (3) zwischen der vorderen THz-Messvorrichtung (3) und der THz-Sensoreinrichtung (20),
- eine gegenseitige Detektion von Fehlern der vorderen THz- Messvorrichtung (3) und der THz-Sensoreinrichtung (20).

13. Verfahren nach Anspruch 11 oder 12, **dadurch gekennzeichnet, dass** das Profil (4) vor oder nach der vorderen THz-Messung gekühlt wird (St3).

14. Verfahren nach einem der Ansprüche 10 bis 13, **dadurch gekennzeichnet, dass** zusätzlich zu dem als Schneidmodus vorgesehenen Arbeitsmodus der THz-Messung während des Schneidprozesses ein oder mehrere der folgenden weiteren Arbeitsmodi vorgesehen sind:
- ein Standby-Modus oder statischer Arbeitsmodus, bei dem der Schlitten nicht verstellt wird und das Profil (4) nicht getrennt wird, wobei die THz- Sensoreinrichtung (20) das geförderte Profil (4) während dessen Förderung in Längsstreifen (23) entlang der Transportrichtung (T) vermisst,
- ein Umlaufmodus als Arbeitsmodus in Phasen, in denen kein Schneidbetrieb erfolgt, wobei die Klemmeinrichtung (14) das Profil (4) erfasst und der Schlitten (12) verstellt wird, wobei die THz- Sensoreinrichtung (20) mit dem Gestell (15) ohne Schneidvorgang um das geförderte Profil (4) rotiert und es in Umfangsrichtung (U) vermisst,
- ein Spiralmodus, in dem die Klemmeinrichtung 14 das Profil (4) nicht erfasst, das Gestell 15 rotiert und die Schneideinrichtung 15 außer Betrieb ist, wobei die THz- Sensoreinrichtung (20) mit dem Gestell (15) um das geförderte Profil (4) rotiert und in einer Spiralbahn oder Schraubenbahn vermisst.

15. Verfahren zum Herstellen von Profilstücken (10), mit folgenden Schritten:
Betreiben eines Extruders (2) unter Zuführung von Ausgangsmaterialien (9) und Extrudieren eines Profils (4),
Transportieren des Profils (4) entlang einer Symmetrieachse (A) und entlang einer Transportrichtung (T),
Durchführung eines Verfahrens nach einem der Ansprüche 10 bis 14, unter Abtrennen der Profilstücke (10) und Vermessung des Profils (4).

16. Verfahren nach Anspruch 15, **dadurch gekennzeichnet, dass** in Abhängigkeit einer Auswertung der Messwerte der THz-Sensoreinrichtung (20), vorzugsweise auch der vorderen Messvorrichtung (3), eine Regelung erfolgt, wobei einer oder mehrere der folgenden Parameter eingestellt werden:
- einer Zuführmenge des Ausgangsmaterials (9)
- einer Extrusionstemperatur des Extruders (3)
- die Transportgeschwindigkeit (v) durch den Abzug (6),
- die Kühlung durch eine Kühleinrichtung (5).

## Claims

1. Separating and measuring device (8) for an extrusion line (1) for producing profiled pieces (10),
the separating and measuring device (8) comprising:
a slider (12) adjustable on a guide means (11) along a direction of transport (T),
a clamping device (14) received on the slider (12) for clamping a profile (4) guided along the direction of transport (T), where the slider (12) with the clamped clamping device (14) is adjustable along the direction of transport (T),
a frame (15) received on the slider (12) and rotating in the circumferential direction (U) about an axis of symmetry (A),
a cutter means (16) received on the frame (15) and rotating with the frame (15) in the circumferential direction (U) about the axis of symmetry (A), the cutter means (16) being adjustable in a radial direction in relation to the axis of symmetry (A), for cutting off profiled pieces (10) from an incorporated profile (4),
**characterised in that**
a rotating THZ sensor means (20) is provided, received on the frame (15) and rotating with the frame (15) in the circumferential direction (U),
the THZ sensor means (20) comprising one or more THZ sensors (22) whose optical axes (B) are each aligned radial towards the axis of symmetry (A), so as to measure the entire circumference of the profile (4) transported by means of the slider (12).

2. Separating and measuring device (8) according to claim 1, **characterised in that** the guide means (11) are formed by rails (11) upon which the slider (12) is adjustable along the direction of transport (T),
where a returning mechanism is provided, e.g., by means of a spring bias or as an active drive, for cyclically returning the slider (12) upon reaching its end position.

3. Separating and measuring device (8) according to one of the above claims, **characterised in that** a rotational drive (30) is provided on the slider (12) for continuously rotating the frame (15) in the circumferential direction (U).

4. Separating and measuring device (8) according to one of the above claims, **characterised in that** the cutter means (16) is formed as a blade or saw for penetrating a wall area (18) of the incorporated profile (4) during circulation around the profile (4).

5. Separating and measuring device (8) according to one of the above claims, **characterised in that** said one or more THZ sensors (22) comprise internal energy reservoirs, in particular, battery packs, rechargeable from the outside of the frame (15), in particular, by means of induction vi an induction charger means (26).

6. Separating and measuring device (8) according to one of the above claims, **characterised in that** a pneumatic blower device (32) is provided for blowing away chips from the measuring plane (24) and/or from the THZ sensors (24).

7. Extrusion line (1), comprising:
an extruder (2) for receiving a starting material (9) and discharging an extrude profile (4) along an axis of symmetry (A) in a direction of transport (T),
an extractor (6) for detaching and transporting the profile (4) in the direction of transport (T), and
a separating and measuring device (8) according to one of the above claims provided for receiving, separating and measuring the profile (4) discharged along the axis of symmetry (A), to discharge profiled pieces (10) having a defined length (L), and
a controller and evaluator means (28) receiving and evaluating measuring signals from the THZ sensor means (20).

8. Extrusion line (1) according to claim 7, **characterised in that** the controller and evaluator means (28) is designed and arranged such that it executes one or more of the following steps:
- controlling the THZ sensor means (20) so as to carry out the THz measurement and receiving the sensor signals (S1) from the THZ sensor means (20),
- controlling the clamping device (14) so as to grab the profile (4),
- controlling the separating device (16),
- controlling the extractor (6) so as to set the transport velocity (v),
- determining one or more of the following characteristics of the profile (4): a wall thickness, an exterior diameter, an interior diameter, a refractive index of the profile material, deviations from the shape of the profile, in particular, wall thickness, diameter, an ovality and/or sagging.

9. Extrusion line (1) according to claim 7 or 8, **characterised in that** an anterior measuring device (3) is provided upstream from the separating and measuring device (8), in particular, upstream from the extractor (6) and a cooling means (5), for measuring the profile (4) discharged by the extruder (2),
said anterior measuring device (3) being designed as an anterior THz measuring device (3) including one or more anterior THZ sensors (7) for measuring the profile (4),
said controller and evaluator means (28)
- receiving, evaluating and comparing the measuring signals (S1, S2) from the **THZ** sensor means (20) and the anterior measuring device (3),
- and determining determined values from the comparison,
in particular, characteristics of the profile (4) and/or changes in the profile (4) and/or calibration values for a calibration of the anterior **THz** measuring device (3), e.g., any shrinkage of the profile (3) and/or deformations, e.g., sagging and/or an ovality of the profile (4).

10. Method for measuring and separating a profile (4) utilising a separating and measuring device (8) according to one of the claims 1 - 6, including the following steps:
moving a profile (4) in the direction of transport (T) at a transport velocity (v) (St1),
providing the separating and measuring device (8),
grabbing the profile (4) by means of the clamping device (14) of the separating and measuring device (8), (St4)
adjusting the slider (12) along the direction of transport (T) at the adjustment velocity (v) of the profile (4) (St4, St5),
rotating the frame (15) of the slider (12) in a circumferential direction (U) around the profile (4), (St5)
where the cutter means (16) and the **THZ** sensor means (20) including one or more **THZ** sensors (22) are provided on the frame (15),
separating the profile (4) by means of the separating device (16) (St5a) and measuring the profile (4) by means of the **THZ** sensor means (20) (St5b) during the rotation in the circumferential direction (U),
severing the profile (4) and forming a cut-off profile piece (10) of a defined length (L), (St6)
repositioning the slider (12) opposite the direction of transport (T) to the starting position (St7), and
resetting to the step of grabbing the profile (4) (St4),
where one or more of the following characteristics of the profile (4) are determined:
a wall thickness, an exterior diameter, an interior diameter, a refractive index of the profile material, deviations from the shape of the profile, in particular, wall thickness, diameter, an ovality and/or sagging.

11. Method according to claim 10, **characterised in that**
further, the profile (4) is measured in an anterior THz measurement prior to being grabbed by means of the clamping device, (St2) and the measuring signals (S1, S2) of the THZ sensor means (20) and the anterior THz measuring device (3) are compared to one another (St8), and determination values are formed or determined from this comparison.

12. Method according to claim 11, **characterised in that**
one or more of the following points are determined as determination values:
- characteristics of the profile (4) and/or changes in characteristics of the profile (4), in particular, shrinkage of the profile (3) and/or deformations, e.g., sagging and/or an ovality of the profile (4),
- calibration values for a calibration of the measuring values of the anterior THz measuring device (3), e.g., due to shrinkage of the profile (3) between the anterior THz measuring device (3) and the THZ sensor means (20),
- mutual detection of faults of the anterior THz measuring device (3) and the THZ sensor means (20).

13. Method according to claim 11 or 12, **characterised in that** the profile (4) is cooled prior to or after the anterior THz measurement (St3).

14. Method according to one of the claims 10 through 13, **characterised in that,** in addition to the THz measuring operation mode provided as cutting mode, one or more of the following operation modes are provided during the cutting process:
- a standby mode or static operation mode, wherein the slider is not adjusted and the profile (4) is not separated, where the THz sensor means (20) measures the transported profile (4) during its transport in longitudinal stripes (23) along the direction of transport (T),
- a circulation mode as operation mode in phases in which no cutting is performed, where the clamping device (14) grabs the profile (4) and the slider (12) is adjusted, where the THz sensor means (20) with the frame (15) rotates around the transported profile (4) without cutting and measures it in the circumferential direction (U),
- a spiral mode in which the clamping device 14 does not grab the profile (4), the frame 15 rotates, and the cutter means 15 is inoperative,
where the THz sensor means (20) with the frame (15) rotates around the transported profile (4) and measures in a spiral path or helical path.

15. Method for manufacturing profiled pieces (10), including the following steps:
operating an extruder (2) while feeding in starting materials (9) and
extruding a profile (4),
transporting the profile (4) along an axis of symmetry (A) and along a direction of transport (T),
carrying out a method according to one of the claims 10 through 14, while separating the profiled pieces (10) and measuring the profile (4).

16. Method according to claim 15, **characterised in that,** depending on an evaluation of the measured values of the THz sensor means (20), preferably, including those from the anterior measuring device (3), a regulation is performed, where one or more of the following parameters are adjusted:
- the feed-in volume of the starting material (9)
- an extrusion temperature of the extruder (3)
- the transport velocity (v) by the extractor (6),
- the cooling by a cooling means (5).

## Revendications

1. Dispositif (8) de séparation et de mesure pour une ligne d'extrusion (1) pour la fabrication de pièces profilées (10),
le dispositif (8) de séparation et de mesure comprenant :
un chariot (12) qui peut être déplacé sur un dispositif de guidage (11) le long d'une direction de transport (T),
un dispositif de serrage (14) logé sur le chariot (12) pour serrer un profilé (4) guidé le long de la direction de transport (T), le chariot (12) avec le dispositif de serrage (14) serré pouvant être déplacé le long de la direction de transport (T),
un châssis (15) monté sur le chariot (12) et pouvant tourner dans la direction circonférentielle (U) autour d'un axe de symétrie (A),
un dispositif de coupe (16) qui est logé sur le châssis (15) et qui peut tourner avec le châssis (15) dans la direction circonférentielle (U) autour de l'axe de symétrie (A), le dispositif de coupe (16) pouvant être déplacé dans la direction radiale par rapport à l'axe de symétrie (A), pour séparer des pièces profilées (10) d'un profilé (4) reçu,
**caractérisé en ce que**
un dispositif capteur THz (20) rotatif est logé sur le châssis (15) et est prévu rotatif avec le châssis (15) dans la direction circonférentielle (U),
dans lequel le dispositif capteur THz (20) comprend un ou plusieurs capteurs THz (22) dont les axes optiques (B) sont chacun alignés radialement vers l'axe de symétrie (A), pour la mesure complète du profilé (4) déplacé avec le chariot (12).

2. Dispositif (8) de séparation et de mesure selon la revendication 1, **caractérisé en ce que** le dispositif de guidage (11) est formé de rails (11) sur lesquels le chariot (12) peut être déplacé le long de la direction de transport (T),
dans lequel un mécanisme de rappel, par exemple par précontrainte de ressort ou comme entraînement actif, est prévu pour le retour cyclique du chariot (12) après avoir atteint sa position finale.

3. Dispositif (8) de séparation et de mesure selon l'une des revendications précédentes, **caractérisé en ce qu'**un entraînement (30) en rotation est prévu sur le chariot (12) pour faire tourner en continu le châssis (15) dans la direction circonférentielle (U).

4. Dispositif (8) de séparation et de mesure selon l'une des revendications précédentes, **caractérisé en ce que** le dispositif de coupe (16) est conçu comme un couteau ou une scie pour pénétrer une zone de paroi (18) du profilé (4) reçu, lors de la rotation autour du profilé (4).

5. Dispositif (8) de séparation et de mesure selon l'une des revendications précédentes, **caractérisé en ce que** les un ou plusieurs capteurs THz (22) présentent des dispositifs de stockage d'énergie internes, en particulier des accumulateurs à batterie, qui peuvent être rechargés depuis l'extérieur du châssis (15), en particulier par induction via un dispositif (26) de charge par induction (26).

6. Dispositif (8) de séparation et de mesure selon l'une des revendications précédentes, **caractérisé en ce qu'**un dispositif (32) de soufflage pneumatique est prévu pour souffler les copeaux hors du plan de mesure (24) et/ou des capteurs THz (24).

7. Ligne d'extrusion (1) comprenant :
une extrudeuse (2) destinée à recevoir une matière première (9) et à délivrer un profilé (4) extrudé le long d'un axe de symétrie (A) dans une direction de transport (T),
un extracteur (6) pour extraire et transporter le profilé (4) dans la direction de transport (T), et
un dispositif (8) de séparation et de mesure selon l'une des revendications précédentes, qui est prévu pour recevoir, séparer et mesurer le profilé (4) délivré le long de l'axe de symétrie (A) afin de délivrer des pièces de profilé (10) de longueur (L) définie, et
un dispositif (28) de commande et d'évaluation qui reçoit et évalue les signaux de mesure du dispositif capteur THz (20).

8. Ligne d'extrusion (1) selon la revendication 7, **caractérisée en ce que** le dispositif (28) de commande et d'évaluation est conçu et agencé de telle sorte qu'il réalise une ou plusieurs des étapes suivantes :
- commande du dispositif capteur THz (20) pour réaliser la mesure THz et l'enregistrement des signaux de capteur (S1) du dispositif capteur THz (20),
- commande du dispositif de serrage (14) pour saisir le profilé (4),
- commande du dispositif de séparation (16),
- commande de l'extracteur (6) pour régler la vitesse de transport (v),
- détermination d'une ou plusieurs des propriétés suivantes du profilé (4) : une épaisseur de paroi, un diamètre extérieur, un diamètre intérieur, un indice de réfraction du matériau du profilé, des écarts par rapport à la forme du profilé, en particulier l'épaisseur de paroi, le diamètre, une ovalité et/ou un fléchissement.

9. Ligne d'extrusion (1) selon la revendication 7 ou 8, **caractérisée en ce qu'**un dispositif de mesure (3) avant est prévu en amont du dispositif (8) de séparation et de mesure, en particulier en amont de l'extracteur (6) et d'un dispositif de refroidissement (5), pour mesurer le profilé (4) délivré par l'extrudeuse (2),
dans lequel le dispositif (3) de mesure avant est conçu comme un dispositif (3) de mesure THz avant avec un ou plusieurs capteurs THz avant (7) pour mesurer le profilé (4),
dans lequel le dispositif (28) de commande et d'évaluation
- enregistre, évalue et compare entre eux les signaux de mesure (S1, S2) du dispositif capteur THz (20) et du dispositif (3) de mesure avant,
- et détermine des valeurs de détermination à partir de la comparaison,
en particulier des propriétés du profilé (4) et/ou des modifications du profilé (4) et/ou des valeurs d'étalonnage pour un étalonnage du dispositif (3) de mesure THz avant, par exemple un rétrécissement du profilé (3) et/ou des déformations, par exemple un fléchissement et/ou une ovalité du profilé (4).

10. Procédé de mesure et de séparation d'un profilé (4) en utilisant un dispositif (8) de séparation et de mesure selon l'une des revendications 1 à 6, comprenant les étapes suivantes :
déplacement d'un profilé (4) dans une direction de transport (T) avec une vitesse de transport (v) (St1),
fourniture d'un dispositif (8) de séparation et de mesure
saisie du profilé (4) par le dispositif de serrage (14) du dispositif (8) de séparation et de mesure, (St4)
déplacement du chariot (12) le long de la direction de transport (T) à la vitesse de déplacement (v) du profilé (4) (St4, St5),
rotation du châssis (15) du chariot (12) dans une direction circonférentielle (U) autour du profilé (4), (St5)
le dispositif de coupe (16) et le dispositif capteur THz (20) avec un ou plusieurs capteurs THz (22) étant prévus sur le châssis (15),
séparation du profilé (4) par le dispositif de séparation (16) (St5a) et mesure du profilé (4) par le dispositif capteur THz (20) (St5b) pendant la rotation dans la direction circonférentielle (U),
sectionnement du profilé (4) et formation d'une pièce de profilé (10) séparée de longueur définie (L), (St6)
retour du chariot (12) dans la direction opposée à la direction de transport (T) dans la position initiale (St7), et
retour à l'étape de saisie du profilé (4) (St4),
dans lequel une ou plusieurs des propriétés suivantes du profilé (4) sont déterminées :
une épaisseur de paroi, un diamètre extérieur, un diamètre intérieur, un indice de réfraction du matériau du profilé, des écarts par rapport à la forme du profilé, en particulier l'épaisseur de paroi, le diamètre, une ovalité et/ou un fléchissement.

11. Procédé selon la revendication 10, **caractérisé en ce qu'**en outre le profilé (4) est mesuré lors d'une mesure THz avant avant d'être saisi par le dispositif de serrage, (St2)
et les signaux de mesure (S1, S2) du dispositif capteur THz (20) et du dispositif (3) de mesure THz avant sont comparés entre eux (St8), et des valeurs de détermination sont formées ou déterminées à partir de la comparaison.

12. Procédé selon la revendication 11, **caractérisé en ce qu'**un ou plusieurs des points suivants sont déterminés comme valeurs de détermination :
- propriétés du profilé (4) et/ou modifications des propriétés du profilé (4), en particulier un rétrécissement du profilé (3) et/ou des déformations, par exemple un fléchissement et/ou une ovalité du profilé (4),
- valeurs d'étalonnage pour un étalonnage des valeurs de mesure du dispositif (3) de mesure THz avant, par exemple à partir d'un rétrécissement du profilé (3) entre le dispositif (3) de mesure THz avant et le dispositif capteur THz (20),
- une détection mutuelle des erreurs du dispositif (3) de mesure THz avant et du dispositif capteur THz (20).

13. Procédé selon la revendication 11 ou 12, **caractérisé en ce que** le profilé (4) est refroidi avant ou après la mesure THz avant (St3).

14. Procédé selon l'une des revendications 10 à 13, **caractérisé en ce qu'**en plus du mode de travail de la mesure THz prévu comme mode de coupe, un ou plusieurs des autres modes de travail suivants sont prévus pendant le processus de coupe :
- un mode veille ou mode de travail statique dans lequel le chariot n'est pas déplacé et le profilé (4) n'est pas séparé, le dispositif capteur THz (20) mesurant le profilé (4) transporté pendant son transport en bandes longitudinales (23) le long de la direction de transport (T),
- un mode circulaire comme mode de travail dans les phases où aucune opération de coupe n'a lieu, le dispositif de serrage (14) saisissant le profilé (4) et le chariot (12) étant déplacé, le dispositif capteur THz (20) tournant avec le châssis (15) sans opération de coupe autour du profilé (4) transporté et le mesurant dans la direction circonférentielle (U),
- un mode en spirale dans lequel le dispositif de serrage 14 ne saisit pas le profilé (4), le châssis 15 tourne et le dispositif de coupe 15 est hors service,
dans lequel le dispositif capteur THz (20) tourne avec le châssis (15) autour du profilé (4) transporté et le mesure selon une trajectoire en spirale ou en hélice.

15. Procédé de fabrication de pièces profilées (10), comprenant les étapes suivantes :
fonctionnement d'une extrudeuse (2) avec alimentation en matières premières (9) et extrusion d'un profilé (4),
transport du profilé (4) le long d'un axe de symétrie (A) et le long d'une direction de transport (T),
réalisation d'un procédé selon l'une des revendications 10 à 14, avec séparation des pièces profilées (10) et mesure du profilé (4).

16. Procédé selon la revendication 15, **caractérisé en ce qu'**un contrôle est effectué en fonction d'une évaluation des valeurs de mesure du dispositif capteur THz (20), de préférence également du dispositif (3) de mesure avant,
dans lequel une ou plusieurs des les paramètres suivants sont réglés :
- une quantité d'alimentation en matière première (9)
- une température d'extrusion de l'extrudeuse (3)
- la vitesse de transport (v) par l'extracteur (6),
- le refroidissement par un dispositif de refroidissement (5).
